Europäisches Patentamt

European Patent Office

Office européen des brevets

(11) Publication number: **0 345 236**
**A2**

# EUROPEAN PATENT APPLICATION

(21) Application number: **89850172.1**

(22) Date of filing: **24.05.89**

(51) Int. Cl.⁴: **C 02 F 1/14**
**C 02 F 1/18**

(30) Priority: **30.05.88 SE 8801996**

(43) Date of publication of application:
**06.12.89 Bulletin 89/49**

(84) Designated Contracting States: **DE ES FR GR**

(71) Applicant: **Stranicky, Fedor**
**Ankdammsgatan 29, II**
**S-171 43 Solna (SE)**

(72) Inventor: **Stranicky, Fedor**
**Ankdammsgatan 29, II**
**S-171 43 Solna (SE)**

(74) Representative: **Uusitalo, Isak**
**Carminger, Uusitalo & Nyberg Patentbyra AB Box 19055**
**Surbrunnsgatan 32**
**S-104 32 Stockholm (SE)**

(54) **Desalination with the aid of solar energy.**

(57) A transportable device for producing fresh water by desalting salt water with the aid of solar energy. The device comprises an evaporation chamber (80) which consists of an enclosure having at least one part (79) which is pervious to solar radiation, a salt-water channel (1) which is located inwardly of the enclosure (80), and the salt water contained therein is directly and / or indirectly irradiated with solar radiation through the pervious part (79), such as to vapourise the salt water. The device also comprises a fresh water collecting chute (82). The salt-water channel (1) is positioned horizontally in spaced relationship with the bottom (59) of the enclosure (80) and rests, through the agency of spacer elements (74-77), on a solar energy absorber (63, 69) which forms the bottom of the enclosure. The absorber includes liquid- conducting ducts (70-73) operative in cooling vapour and condensing vapour onto the absorber, this condensate being collected in the fresh-water chute (82).

The salt-water channel (1) will preferably have the form of a flat, flexible strip which is divided into a bottom part and four side panels (2 - 5), these panels being intended to be raised from the bottom part, when using the device, and secured together in a liquid-tight fashion.

Fig. 3

Fig. 4

Description

## Desalination with the aid of solar energy.

The present invention relates to a method for improving the efficiency of solar-energy desalination apparatus of the simplest kind, the known so-called solar stills, in which salt water is either circulated or held stationary in channels or like passageways which are exposed to solar radiation such as to cause the water to vapourize in said channels. The resultant water vapour is condensed on sloping pervious elements which are positioned above the channels and sealingly connected thereto, the temperature of these surfaces being somewhat lower than the temperature of the salt water in the channels. The vapour condenses on the inwardly located surface of the pervious elements, which are normally made of glass, and runs down along said surface into separate collecting channels, from where it is removed as fresh water. Experience has shown that solar sills, which are mostly used around the equatorial belt, will produce about four liters of fresh water for each square meter of sun-irradiated channel, calculated on a daily basis of six operating hours and a solar-radiation energy of 1 kW for each square meter of channel irradiated by the sun. The low efficiency of these stills in the production of fresh water is unacceptable. The primary drawback with solar stills is that only a small amount of fresh water is produced in relation to the costs of the desalination still or plant. The low production of fresh water is contingent on several factors, such as the loss of all condensation heat to the surroundings through the glass panels; the small temperature difference between the salt water in the channels and the glass panels, all at which are heated by solar radiation; the heat which radiates from the channels as a result of the intrinsic convection of the enclosed air, and also the heat of condensation which accumulates in the glass panels.

The object of the invention is to eliminate all of the aforesaid drawbacks and to provide a readily transportable desalination plant which, subsequent to use, can be rolled up on bobbins for transportation to some other site and there unrolled, thereby enabling the plant to be put into operation immediately, without the requirement of auxiliary structures or like complicating measures with respect to the erection and use of the desalination plant. When the plant is in operation, the earlier drawbacks experienced with known solar stills are overcome, by increasing the temperature in the channels or like passageways, by recovering condensation heat from the vapourization process, and by increasing the temperature difference between the vapour an the condensation surfaces, and by the possibility of mounting in the desalination plant one or more mirrors which will direct the rays of the sun onto the channels and therewith increase the amount of solar energy which acts on the salt water per unit area of the channels, therewith greatly increasing the total production of fresh water.

This has been achieved in accordance with the present invention, by integrating and combining the desalination plant with suitable solar collectors, wherein both the solar collectors and the desalination plant are produced ready for use and are rolled up onto bobbins and subsequently unrolled on the site at which the plant is to be used. The desalination part of the plant consists of a salt-water channel formed from liquid impervious, flexible material, preferably from thin rubber fabric of suitable quality. The channel structure is folded around fold lines, in a manner conventional with regard to packing techniques, such as to enable the side panels to be raised vertically , subsequent to unrolling the originally flat channel from said bobbins.

A solar energy absorber suitable for application with the present invention is described and illustrated in Swedish Patent Application No. 82064395, relating to "Solar heat absorbing arrangements". This type of absorber is particularly suitable from a thermodynamic aspect and comprises flexible components which are also unrolled on site, similarly to the desalination part of the plant. The absorber comprises a multiple of mutually superimposed, thin, salt-resistant metal foil sheets or layers and underlying rubber fabric which are mutually joined by vulcanization, such as to provide liquid-conducting ducts. The upper thin metal foils are effective in transmitting practically all kinds of experienced heat in thermodynamic processes. The salt-water channel is preferably positioned so that it screens the absorber, either completely or partially, from solar radiation, by resting on spacers above the absorber. This provides a gap between the bottom surface of the channel and the upper surface of the absorber.

Both the channel and the absorber are sealingly enclosed and isolated from the surroundings, and form the so-called evaporation chamber in which vapourization of the salt water heated in the channel takes place. This is made possible by the fact that one or more walls of the enclosure are made of a material which is pervious to the rays of the sun. Furthermore, part of the absorber and channel enclosure is preferably utilized as a solar radiation mirror for amplifying the concentration of solar radiation onto the salt water present in the channel. The evaporation chamber is separated from the surroundings and is sealingly embraces the channel. A part or parts of this chamber is/are preferably heat insulated.

The inventive desalination plant provides very favourable advantages in desolate and remote places, since all of the components of the desalination plant are made from material which can be rolled up on bobbins. The plant can be transported readily to the site intended and there unrolled, ready for the production of fresh water. This enables the plant to be prepared ready for use on desolate beaches and other remote sites, without requiring the building of auxiliary desalinating structures. The desalination plant according to the invention has the following modus operandi:

The relatively low-temperature sea water is first pumped into the part of the plant which lies beneath the channel and which may, advantageously, comprise the aforesaid absorber known from Swedish Patent Application No. 82064395. The salt water first passes through the absorber before entering the channel, in which it is heated by solar energy and in which all or part of the water is vapourized. The vapour condenses on the upper part of the absorber, this upper part enclosing the colder water arriving from the sea. As before mentioned, all of the side members embracing the channel and the absorber are heat insulated. The colder, upper part of the absorber is located in the enclosure, where the major part of the water vapour condenses. This results in a drop in pressure along the colder surface of the absorber, which in turn increases the supply of vapour to said surface.

At the same time, practically all of the heat of vapourization is recovered, by condensing vapour on the absorber, which in turn results in an increase in the temperature of the water entering the absorber. The fresh water condensate collects on the upper part of the absorber, this upper absorber part forming a fresh water duct a chute from which the fresh water can be readily removed. The preferred adsorber according to Swedish Patent Application No. 82064395 is particularly suitable in this respect, since the vapour condenses on a metal foil, the heat conduction between the colder salt water and the warmer vapour being practically at a maximum. The solar energy which heats the salt water is, in turn, transmitted to the screened absorber through the vapourization-condensation process. The solar heat absorber according to the aforesaid Swedish Patent Application is intended to be installed in the solar collector.

This is preferably used as a heat exchanger in the inventive desalination plant, where the solar energy is utilized indirectly through the vapourising-condensing process. By condensing vapour onto absorber surfaces, practically all vapourisation heat is recovered, thereby improving the efficiency of the plant by a factor of 1.5 - 2 according to preliminary calculations. As is known, the amount of salt water supplied to the salt-water channel should be in certain excess to the fresh water produced, so that the salt water concentration does not become excessively high and therewith inhibit the evaporation of the salt water. This excess, the so-called brine, is allowed to run into the sea. Before this takes place, the brine may be passed through a heat exchanger located between the absorber and the salt water channel, therewith recovering heat from the brine water. This will improve the efficiency of the desalination plant still further. A part of the absorber/salt-water channel enclosure may be utilized to reflect the rays of the sun onto the salt-water channel, thereby obtaining an increase in the amount of radiation received by each square meter of exposed salt-water surface. This also results in an increase in the amount of fresh water produced, due to an increase in the temperature of the salt water in the salt-water channel. The insulation surrounding the plant may have the form of a double-wall insulating jacket structure which is filled with air, subsequent to being rolled out on site.

This type of insulating arrangement is preferred, because it is not brought to an operative state until the the plant has been unrolled, which means that all plant parts which surround the evaporation chamber can be rolled up on bobbins for transportation and on-site erection with the insulating jackets empty of air. Consequently, the evaporation chamber as a whole will take up very little space, due to its small thickness, and will have only a small radial extension when rolled up on the bobbins. Subsequent to unrolling the plant, air is pumped into the insulating jackets or cavity walls of the evaporation chamber, the jackets therewith being stiffened and braced in addition to effectively thermally insulating the evaporation chamber.

That part of the evaporation chamber which is permeable to sun rays is preferably constructed of double, transparent, heat-resistant plastic foil sheets having spacing elements disposed therebetween, such as described and illustrated in Swedish patent no. 7714549-8. Such covering material is heat insulating and can be rolled onto and unrolled from bobbins on site, similarly to the other plant components.

Preliminary thermodynamic calculations have shown that when a water surface is heated by solar radiation to 1 kW/m$^2$, there is obtained a power of 1848k cal/h divided on direct incident radiation, recovery of evaporation heat through the condenser, and directed solar concentration. The total losses are calculated to be about 1/3rd of the energy available, which enables from 1.6 to 2 lites of fresh water to be produced for each square meter of exposed and sun-irradiated water in the channel with each hour in which the plant is in operation. In relation to known solar-still-installations, this results in an increase in fresh water productivity by a factor of 2-3. This improvement in combination with an integrated system for manufacture, transportation and on site erection in respect of all components forming the inventive desalination plant, provide a plant of particularly low cost.

It lies within the concept of the invention to provide further simplifications with regard to the running of the desalination plant. For instance, the incoming salt water, which first passes the absorber and is then led into the channel, can be replaced with a closed fresh water circuit within the absorber, this fresh water taking up all of the heat of condensation and conducting the same to a heat exchanger, which subsequently delivers said heat to the incoming salt water, thus preheating the salt water prior to leading the same into the salt-water channel, heating of the salt water in the channel then being continued by the rays of the sun. This avoids the necessity of effectively filtering the incoming salt water, which is always contaminated with small particulate matter, such as water snails, algae, etc., which would otherwise fasten the absorber, which is more difficult to clean than the open channel when the plant has been in use for some time. This inclusion of the fresh water circuit greatly reduces the need for filtering devices and those filter devices installed can be of the simplest kind. In practice it has been found that the channels located within the evaporation chamber should have a width of 0.6 m and a length of 20 m.

When it is found necessary to clean the desalination plant, the channel can be withdrawn from the evaporation chamber, by opening the end walls of said chamber, since the channel is supported on spacer elements above the absorber, with the aid of rope or the like attached to the channel, whereafter the channel can be cleaned readily and quickly.

The invention will now be described in more detail with reference to the accompanying drawings, which illustrate examples of use of the invention and in which;

 Figure 1 is a view from above of a flat, flexible channel in its unrolled state;

 Figure 2 is a perspective view of the same channel in its completed state subsequent to erecting the side walls;

 Figure 3 is a cross-sectional view of the desalination plant;

 Figure 4 is a longitunal sectional view of the desalination plant; and

 Figure 5 is schematic view from above of the channel and underlying absorber with separated fresh water circuit.

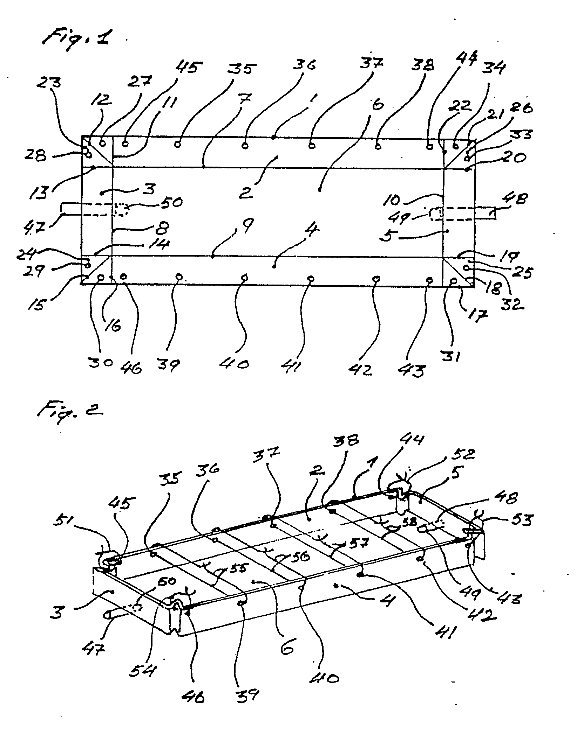

In Figure 1 the reference 1 identifies a strip of flexible material divided into four outer panels 2, 3, 4 and 5 which are separated from the centre panel 6 of the strip 1 by fold lines 7, 8, 9 and 10. All four corners of the strip 1 are provided with respective fold lines 11, 12, 13, 14, 15, 16, 17, 18, 19, 20, 21 and 22, which form corner panels 23, 24, 25 and 26. Each of the corner panels is provided with two holes 27, 28, 29, 30, 31, 32, 33 and 34. The panels 2 and 4 of the strip 1 are also provided with holes 35, 36, 37, 38, 39, 40 41 and 42. The panels 2, 3, 4 and 5 are also provided with holes 43, 44, 45 and 46. Sealingly fitted to the strip 1 are conduits 47 and 48 which communicate with the strip through holes 49 and 50.

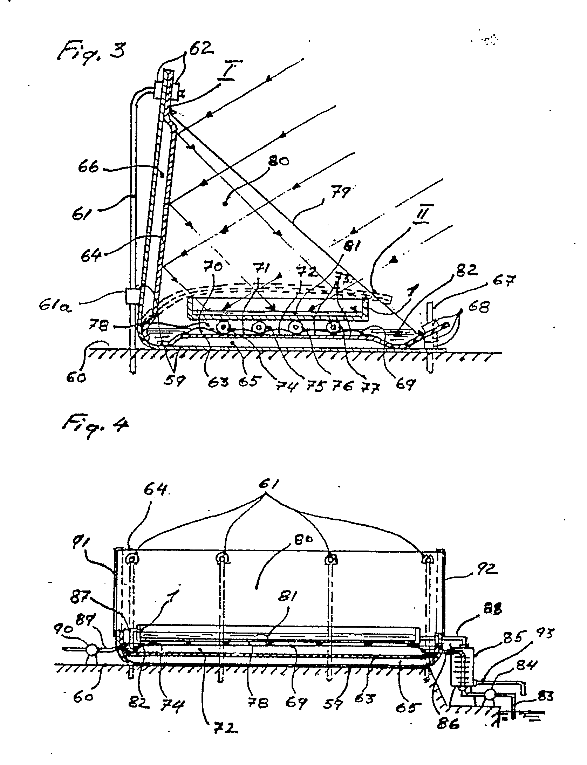

Figure 2 is a perspective view of the channel in its erected state, with vertically raised walls.

As will be seen from Figure 2, the walls are formed by the outer panels 2, 3, 4 and 5 shown in Figure 1, which are raised to a vertical position by folding around the fold lines 7, 8, 9 and 10. At the same time, the corner panels are folded inwardly around the fold lines 11 - 22 in Figure 1 and are clamped and tied together with the aid of ropes 51 - 54 extending through holes 27 - 34 in Figure 1 and also through holes 43 - 46.

The side walls 2, 3, 4 and 5 are held vertical by the ropes 55, 56, 57 and 58 extending through holes 35 - 42.

The salt water enters through conduits and holes 48 and 49 and exits through conduits 47 and 50 (Figure 1), the arrangement being such that the channel 1 is completely water tight when unrolled on site.

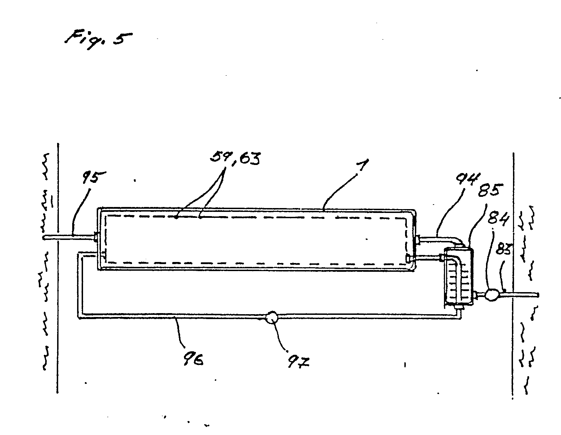

The plant is preferably placed on flat ground or on ground which has been made flat. Figure 3 shows a rubber sheet 59 which is placed on the ground 60 and part of which is folded up at an angle to the remainder of the sheet, which rests on the ground, and is held in an upstanding position, by means of a post 61 which is driven into the ground through a hole in the sheet 59 and is held firm by two identical, slotted rubber blocks 62, in the illustrated manner. Vulcanised along the edges of the rubber sheet 59 are further rubber sheets 63 and 64, such as to provide a sealed compartment for compressed air 65 and 66. The opposite side of the rubber sheet 63 is held uplifted by a post 67 driven into the ground, and is attached to said post by means of three slotted rubber blocks 68 or like devices, said blocks also securing the rubber sheets 59 and 63. Also vulcanised to the rubber sheet 63, along the edges and along logitudinally extending and mutually parallel lines is a metal foil sheet 69, which defines liquid conducting channels 70, 71, 72 and 73. Spacer elements 74, 75, 76 and 77 in the form tubular rubber blocks are attached to the metal foil sheet 69 and rest on the salt water channel 1 in accordance with Figure 2. There is thus formed between the metal foil sheet 69 and the channel 1 a gap 78. A transparent and heat-resistant plastic foil sheet 79 is sealingly attached to the upper and the lower part of the rubber sheet 59 in a known manner, e.g. with the aid of a stapling machine. Although not shown in Figure 3, the end walls are sealed in a similar manner, to form an evaporation chamber 80 in which the salt water 81 heated in the channel 1 is evaporated. The water vapour thus obtained is condensed on the the metal foil sheet 69, which is cooled by the cooler water in the ducts 70 - 73, and the fresh water 82 thus produced on top of the metal foil sheet 69 is carried away immediately for use. This is made possible by the fact that the metal foil sheet 69 and the two upwardly folded ends of the rubber cloth 59 together form a chute for fresh water 82.

The pressurized air is pumped into the space or chamber 65 and 66 through a conduit fitted with a closure means, not shown in Figuer 3 for the sake of simplicity. Stays or posts 61 are also passed through eyes 61a attached to the rubber sheet 59. In order to provide good reflection of the sun's rays, the upper surface of the rubber sheet 64 may be coloured or covered with thin, corrosion-restistant metal foil. The sun's rays are illustrated by means of arrowed lines and are reflected by the rubber sheet 64 onto the salt water present in the salt water channel 1, said water thus being heated by direct radiation. The Roman numerals I and II in Figure 3 illustrate the possibility of folding down or collapsing the upper part of the rubber sheet 59 and the rubber sheet 64 in the event of bad weather, the numeral II indicating the sheets in their folded down position, in broken lines, the sheets 59 and 64 first being released from post 61. When occupying position II, the sheets will catch less wind and will also protect the plant in an effective manner. The plastic foil sheet 79 is folded inwards, when folding down the sheets 59 and 64.

In the case of the Figure 4 illustration, salt water is pumped from the sea through a conduit 83, by means of a pump 84 and is passed to a schematically illustrated heat exchanger 85. The water is then carried through conduit 86 into the ducts formed between the metal foil sheet 69 and the rubber sheet 63, as illustrated in Figure 3. The salt water 81 runs from the ducts, through a conduit 87 and into the salt water channel 1 and from there through a conduit 88 and into the heat exchanger 85, which is emptied through a conduit 93, said water exiting from the channel 1 gravitationally due to the difference in levels.

Figure 4 also shows the rubber sheets 59 and 63, analogously with Figure 3, which together form the pressurized-air space 65 and which rest on the ground 60. The Figure also shows a plurality of spacer elements disposed in the longitudinal direction, of which the first is represented by the spacer element 74. The sea-water channel 1 rests on these spacer elements, such as to form the space or gap 78. The spacer elements are arranged so as not to prevent vapour from the heated salt water 81 in the channel 1 from condensing on the metal foil surfaces 69, where fresh water 82 collects and is transported away by the conduit 89 and pump 90. Figure 4 also shows plastic foil sheets 91 and 92, which are stapled to the end walls and assist in isolating the evaporation chamber from the surroundings. A number of posts or stays 61 hold the rubber sheet with associated pressurized-air chamber 69 in an upstanding position.

In Figure 5, the conduit 83 is shown connected to the pump 84, which is operative in pumping salt water in a schematically illustrated heat exchanger 85, analogously with Figure 4, and into the salt water channel 1, through a conduit 94, and then from the channel 1 through a conduit 95. Shown in broken lines beneath the salt water channel 1 is an absorber, which comprises a rubber fabric 63 and metal foil sheet 69. The absorber is filled with fresh water which circulates via conduit 96 and pump 97 and delivers heat to the heat exchanger 85, in which the salt water is pre-heated prior to entering the salt water channel 1, through conduit 94.

## Claims

1. A transportable device for producing fresh water by desalting salt water with the aid of solar energy, said device comprising an evaporation chamber (80) which consists of an enclosure having at least one part (79) which is pervious to solar radiation, a salt-water channel (1) located inwardly of the enclosure (80), said salt water being directly and/or indirectly irradiated with solar radiation through said pervious part (79), and a fresh water collecting chute (82), **characterised in that** the salt-water channel (1) is positioned horizontally in spaced relationship with the bottom (59) of the enclosure (80) and rests on a solar energy absorber (63, 69) through the agency of spacer elements (74-77), said absorber forming the bottom of said enclosure; in that the absorber includes liquid-conducting ducts (70-73) operative in the condensation of vapour onto the absorber; in that the fresh-water chute is intended to collect the fresh water condensed on the absorber; and in that the liquid in the absorber (63,69) is contained in a closed circuit and takes up the heat of condensation and delivers said heat to the incoming salt water.

2. A device according to claim 1, **characterised in** that the salt-water channel (1) comprises a flexible elongated strip which is divided into a bottom part and four side panels (2-5); and in that the side panels (2-5) can be raised upwardly from the bottom panel and secured to one another in a liquid-tight fashion.

3. A device according to any one of claims 1 and 2, **characterised in** that the enclosure is formed from flexible material, and in that the pervious part (79) comprises at least one sheet of transparent foil material, preferably a plastics material.

4. A device according to any one of claims 1-3, **characterised in** that that the enclosure includes a sun-ray reflecting wall (64) which is located immediately opposite the light pervious part (79).

5. A device according to any one of claims 1-4, **characterised in** that the bottom of the device and the wall located opposite said pervious part (79) comprise at least two flexible and air-tight sheets (63,64), e.g. rubber sheets, such as to provide between the sheets an inflatable compartment (65,66) which when inflated reinforces and thermally insulates the bottom and said wall and ensures that the device will maintain its shape in use.

6. A device according to claim 5, **characterised in** that wall is constructed so that it can be lowered over the salt-water channel (1), when the compartment (65, 66) is devoid of air.

7. A device according to any one of claims 1-6, **characterised in** that the bottom and all walls of the device are made of a soft and flexible material, such as to enable the device to be rolled onto bobbins in its inactive state.

8. A device according to any one of claims 1-7, **characterised in** that the absorber comprises a rubber sheet (63) which is covered with metal foil; and in that the ducts (70-73) are located between the metal foil (69) and the rubber sheet (63).

9. A device according to any one of claims 1-8, **characterised in** that in the operative state of the device the ducts (70-73) in the absorber are intended to contain salt water; and in that the ducts are connected to the salt-water channel (1) by conduit means (87), the arrangement being such as to heat the salt water prior to its entry into the salt-water channel and to recover the heat of condensation.

10. A device according to any one of claims 1-8, **characterised in** that the liquid in the absorber is fresh water contained in a closed circuit.

Fig. 1

Fig. 2

Fig. 3

Fig. 4

Fig. 5